# EUROPÄISCHE PATENTANMELDUNG

(11) **EP 1 103 442 A2**
(43) Veröffentlichungstag der Anmeldung: **30.05.2001**
(21) Anmeldenummer: 00125464.8
(22) Anmeldetag: 21.11.2000
(51) Int. Cl.: B61D 47/00, B65G 63/06

(54) **Vorrichtung zum Umsetzen von Transportcontainern**

(30) Priorität: 24.11.1999 DE 29920588 U
(71) Anmelder: Kugel GmbH & Co.KG, 58553 Halver (DE)
(72) Erfinder: Kugel, Friedrich Wilhelm, 58566 Kierspe (DE)
(74) Vertreter: Köchling, Conrad-Joachim

(57) **Zusammenfassung**

Um eine Vorrichtung zum Umsetzen von Transportcontainern (1) von schienengebundenen Fahrzeugen (2) auf nicht schienengebundene Fahrzeuge im Bereich einer Umladestation mit mindestens einem Bahngleis (3) und einem im Bereich des Bahngleises (3) befindlichen Fahrbereich (4) für Lastkraftwagen, zu schaffen, die hinsichtlich ihres konstruktiven Aufwandes vereinfacht ist und die mit kostengünstigen Mitteln das Umladen von Containern von Waggons auf Kraftfahrzeuge ermöglicht wird vorgeschlagen, dass beidseits neben dem Bahngleis (3) parallel zum Bahngleis (3) eine schienenartige Hebeeinrichtung (5) angeordnet ist, deren Länge mindestens der Länge eines anzuhebenden Containers (1) entspricht, dass jede der beiden Hebeeinrichtungen (5) in Längsrichtung der schienenartigen Hebeeinrichtung (5) verstellbare und ggf. in beliebiger Position feststellbare Stützen (6) aufweist und dass an den Stützen (6) Halteelemente (7) angeordnet sind, die an den anzuhebenden Container (1) ankuppelbar sind.

## Beschreibung

Die Erfindung betrifft eine Vorrichtung zum Umsetzen von Transportcontainern von schienengebundenen Fahrzeugen auf nicht schienengebundene Fahrzeuge im Bereich einer Umladestation mit mindestens einem Bahngleis und einem im Bereich des Bahngleises befindlichen Fahrbereich für Lastkraftwagen

Es ist bekannt, übliche Transportcontainer mit schienengebundenen Fahrzeugen zu transportieren. Um diese Transportcontainer von den schienengebundenen Fahrzeugen, insbesondere von flachen Eisenbahnwaggons abheben zu können, sind einerseits Hubstapler oder auch Portalkräne bekannt. Solche Portalkräne sind zwar funktionell, jedoch sind sie sehr kostspielig, so daß kleinere Verlade- oder Umladestationen nicht rentabel mit solchen Einrichtungen ausgestattet werden können. Um an kleineren Umladestationen, wie beispielsweise einem Unterzentrum wie es früher zur Stückgutverladung betrieben wurde, einen Umladevorgang von Transportcontainern von schienengebundenen Fahrzeugen auf Lastkraftwagen zu ermöglichen, sind andererseits fahrbare Hebeböcke bekannt. Solche verfahrbaren Hebeböcke sind im Bereich einer Umladestation neben dem Gleis einer Gleisanlage in Schienen verfahrbar angeordnet, wobei die Schienen parallel zu dem entsprechenden Gleis der Umladestation angeordnet sind. Diese Hebeböcke weisen quer verschiebbare Pratzen auf, die in den Hebeböcken motorisch höhenverstellbar und quer verschiebbar sind. Zum Umladen eines Containers, der sich auf einem Waggon befindet, werden vier solcher Hebeböcke entsprechend zu dem Container ausgerichtet an beiden Längsseiten des Containers angeordnet und mit ihren Pratzen auf die Höhe der entsprechenden Öffnungen des Containers gebracht und in diese Öffnungen eingeschoben, die zum Anheben des Containers dienen. Anschließend werden die Pratzen der Hebeböcke nach oben verfahren, so daß der gesamte Container von dem Waggon abgehoben wird. Nachfolgend kann der nun freie Waggon mit einem geeigneten Fahrzeug unter dem Container herausgezogen werden und ein Kraftfahrzeug kann mit der entsprechenden Ladeeinrichtung unter den Container gefahren werden. Anschließend kann der Container mittels der Hebeböcke auf dem Kraftfahrzeug abgesetzt werden.

Eine solche Einrichtung ist zwar brauchbar, jedoch weiterhin sehr kostenintensiv, da zum Umladen eines Containers vier solcher verfahrbarer Hebeböcke mit sämtlichen Stelleinrichtungen und dergleichen vorgesehen sein müssen.

Ausgehend von diesem Stand der Technik liegt der Erfindung die Aufgabe zugrunde, eine Vorrichtung gattungsgemäßer Art zu schaffen, die hinsichtlich ihres konstruktiven Aufwandes vereinfacht ist und die mit kostengünstigen Mitteln das Umladen von Containern von Waggons auf Kraftfahrzeuge ermöglicht.

Zur Lösung dieser Aufgabe wird vorgeschlagen, daß beidseits neben dem Bahngleis parallel zum Bahngleis eine schienenartige Hebeeinrichtung angeordnet ist, deren Länge mindestens der Länge eines anzuhebenden Containers entspricht, daß jede der beiden Hebeeinrichtungen in Längsrichtung der schienenartigen Hebeeinrichtung verstellbare und ggf. in beliebiger Position feststellbare Stützen aufweist und daß an den Stützen Halteelemente angeordnet sind, die an den anzuhebenden Container ankuppelbar sind.

Gemäß der Erfindung sind beidseits neben dem entsprechenden Bahngleis schienenartige Hebeeinrichtungen angeordnet, deren Länge mindestens der Länge eines anzuhebenden Containers entspricht. Der entsprechende Waggon mit dem darauf befindlichen Container wird zwischen die schienenartigen Hebeeinrichtungen eingefahren. Anschließend werden die entlang der schienenartigen Hebeeinrichtungen verstellbaren Stützen auf die Sollposition verschoben, in der die Halteelemente der Stützen mit den entsprechenden Funktionsöffnungen der Container lagemäßig übereinstimmen. Nachfolgend werden dann die schienenartigen Hebeeinrichtungen angehoben, bis die Halteelemente exakt zu den entsprechenden Aufnahmeöffnungen der Container ausgerichtet sind. Die Halteelemente können dann in die entsprechenden Öffnungen des Containers eingeschoben werden. Anschließend werden die schienenartigen Hebeeinrichtungen weiter angehoben, so daß der Container relativ zum Waggon angehoben wird und der Waggon unter dem Container herausgezogen werden kann. Nachfolgend kann ein entsprechendes Kraftfahrzeug, beispielsweise ein Lastwagen, mit seiner Ladefläche unter den Container fahren. Die schienenartigen Hebeeinrichtungen werden dann abgesenkt, so daß der Container auf das Kraftfahrzeug abgesetzt ist. Nachfolgend können die Halteelemente aus den Funktionsöffnungen des Containers herausgezogen werden. Das mit dem Container beladene Kraftfahrzeug kann dann abgefahren werden. Gegebenenfalls ist es auch möglich, die schienenartigen Hebeeinrichtungen noch weiter abzusenken, um diese beispielsweise im neben den Gleisen befindlichen Fahrbereich bündig zu versenken.

Die Erfindung stellt äußerst einfache Aggregate zum Umladen zur Verfügung, da lediglich die beiden Hebeeinrichtungen mit einem entsprechenden Stellantrieb versehen werden müssen, um das Anheben und Absenken zu ermöglichen. Die Stützen sind in einfacher Weise entlang der schienenartigen Hebeneinrichtungen verfahrbar, wobei auch die an den Stützen angeordneten Halteelemente einfache Schubriegel oder dergleichen sein können. Bevorzugt ist vorgesehen, daß die Länge der schienenartigen Hebeeinrichtung ein Mehrfaches der Länge von anzuhebenden Containern aufweist, wobei jede Hebeeinrichtung mindestens zwei Stützen mit Halteelementen für jeden anzuhebenden Container aufweist.

Auf diese Weise können beispielsweise zwei oder auch drei oder mehr Container gleichzeitig aufgenommen werden. Beispielsweise können auf einem Waggon drei übliche 20-Fuß-Container angeordnet sein oder es können auch ein 40-Fuß-Container und ein 20-Fuß-Container auf einem solchen Waggon angeordnet sein. Auf kleineren Waggons sind beispielsweise nur ein 40-Fuß-Container oder zwei 20-Fuß-Container angeordnet. Je nach Ausstattung der Hebeeinrichtungen können alle auf einem Waggon befindlichen Container gleichzeitig abgehoben werden, so daß der entsprechende Waggon darunter herausfahrbar ist und ein entsprechendes Lastkraftfahrzeug unter die Container fahrbar ist, um die Container einzeln der Reihe nach aufzunehmen.

Bevorzugt ist zudem vorgesehen, daß die schienenartigen Hebeeinrichtungen mit synchron betätigbaren Hubelementen gekoppelt sind.

Desweiteren ist bevorzugt vorgesehen, daß die schienenartigen Hebeeinrichtungen hydraulisch betätigt sind. Auch eine pneumatische Betätigung ist möglich.

Ein schematisiertes Ausführungsbeispiel der Erfindung ist in der Zeichnung dargestellt und im folgenden näher beschrieben.

Es zeigt:
- Figur 1: eine erfindungsgemäße Vorrichtung mit von einem Waggon abgehobenen Containern;
- Figur 2: desgleichen in Draufsicht gesehen;
- Figur 3: die Vorrichtung in der Ansicht gemäß Figur 1 bei noch nicht angehobenen Containern;
- Figur 4 bis 6: 5 die Vorrichtung in unterschiedlichen Betriebsstellungen.

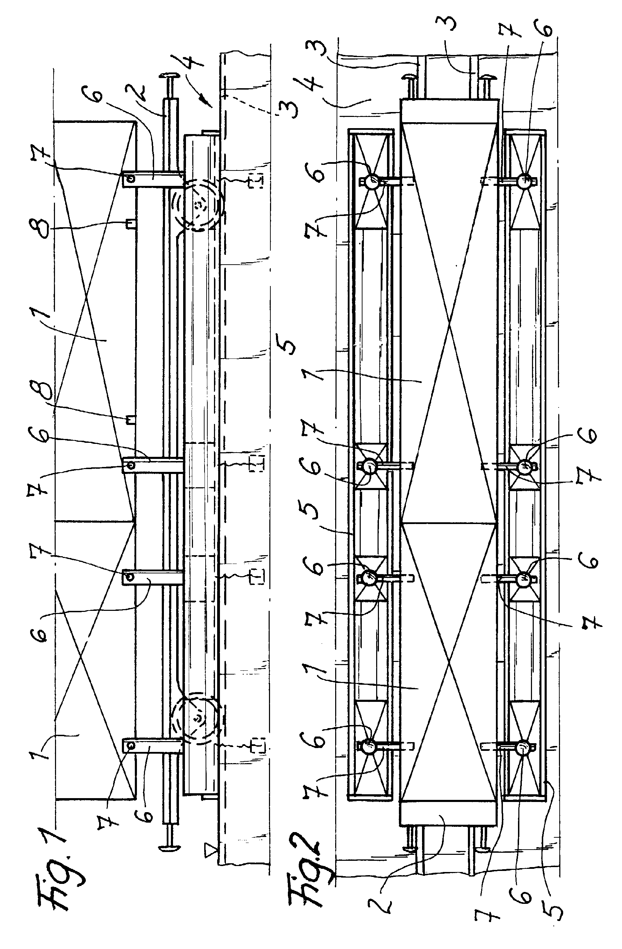

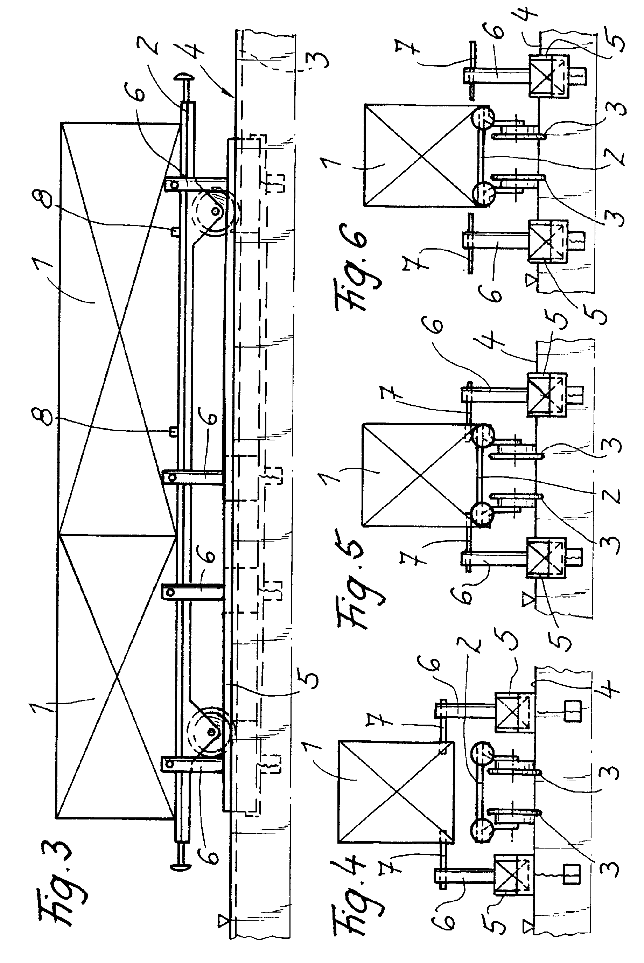

Die in der Zeichnung dargestellte Vorrichtung zum Umsetzen von Transportcontainern 1 von einem schienengebundenen Fahrzeug, beispielsweise einem Waggon 2 im Bereich einer Umladestation mit mindestens einem Bahngleis 3 und einem im Bereich des Bahngleises befindlichen Fahrbereich 4 neben, vor und hinter dem entsprechenden Waggon, der zum Befahren mit Lastkraftwagen geeignet ist, besteht im wesentlichen aus zwei beidseits neben dem Bahngleis 3 und parallel zum Bahngleis angeordneten schienenartigen Hebeeinrichtungen 5, deren Länge im Ausführungsbeispiel der Länge eines entsprechenden Waggons 2 entspricht. Jede der beiden Hebeeinrichtungen 5 weist in Längsrichtung verstellbare und in beliebiger Position feststellbare Stützen 6 auf. An den oberen Enden der Stützen sind Halteelemente 7 angeordnet, die an den anzuhebenden Container 1 ankuppelbar sind. Hierzu weisen die Container nahe ihrer Bodenfläche Einschuböffnungen 8 auf, wie sie beispielsweise in Figur 1 und Figur 3 gezeigt sind. Solche Einschuböffnungen befinden sich auch dort, wo die entsprechenden Stützen 7 eingreifen können.

Der Betrieb der Vorrichtung erfolgt wie folgt:

Zunächst wird der Waggon 2 mit den darauf befindlichen Containern 1 zwischen die Hebeeinrichtungen 5 eingeschoben in eine Position, wie sie in Figur 3 gezeigt ist und ebenso in Figur 6. Anschießend können die Hebeeinrichtungen 5 in geeigneter Weise vertikal nach oben verstellt werden, sofern dies erforderlich ist, damit die Halteelemente 7 im Niveau der entsprechenden Aufnahmeöffnungen 8 des jeweiligen Containers 1 ausgerichtet sind. Nachfolgend können die Halteelemente 7 in die Kupplungsposition verschoben werden, wie dies in Figur 5 schematisch gezeigt ist. Nachfolgend werden dann die beiden Hebeeinrichtungen 5 synchron angehoben und zwar in eine Position, wie sie in Figur 1, 2 und Figur 4 gezeigt ist. Dabei ist der oder sind die Container 1 vollständig von dem entsprechenden Waggon 2 abgehoben. Der Waggon 2 kann mit einem geeigneten Fahrzeug unter den Containern weggezogen werden. Nachfolgend kann dann ein Lastkraftwagen mit seinem Fahrgestell unter den Container 1 oder auch unter mehrere Container zwischen beide Hebeeinrichtungen 5 eingefahren werden. Nachfolgend können die Hebeeinrichtungen 5 in die Ausgangsposition abgesenkt werden, so daß die Container 1 oder der Container 1 auf dem Fahrgestell des Kraftfahrzeuges aufsteht. Nachfolgend können dann die Halteelemente 7 aus den entsprechenden Kupplungsöffnungen der Container 1 herausgezogen werden, so daß der Container frei ist und mit dem Kraftfahrzeug abtransportiert werden kann. Der Ladevorgang kann dann analog entsprechend mit anderen Waggons wiederholt werden.

Vorzugsweise ist die Länge der schienenartigen Hebeeinrichtung 5 ein Mehrfaches der Länge der anzuhebenden Container, vorzugsweise gleich der Länge des maximal möglichen Waggons 2, so daß alle auf einem Waggon befindlichen Container 1 mit der Hebeeinrichtung 5 gleichzeitig angehoben werden können. Jede der beiden Hebeeinrichtungen weist mindestens zwei Stützen 6 mit entsprechenden Halteelementen 7 auf, so daß jeder Container 1 an vier Stellen gleichzeitig angekuppelt und gestützt werden kann. Vorzugsweise sind zudem die schienenartigen Hebeeinrichtungen 5 über synchron betätigbare Hubelemente höhenverstellbar, wobei die Hubelemente beispielsweise hydraulische oder pneumatische Antriebe sein können.

Die Erfindung ist nicht auf das Ausführungsbeispiel beschränkt, sondern im Rahmen der Offenbarung vielfach variabel. Alle neuen, in der Beschreibung und/oder Zeichnung offenbarten Einzel- und Kombinationsmerkmale werden als erfindungswesentlich angesehen.

## Patentansprüche

1. Vorrichtung zum Umsetzen von Transportcontainern (1) von schienengebundenen Fahrzeugen (2) auf nicht schienengebundene Fahrzeuge im Bereich einer Umladestation mit mindestens einem Bahngleis (3) und einem im Bereich des Bahngleises (3) befindlichen Fahrbereich (4) für Lastkraftwagen, dadurch gekennzeichnet, dass beidseits neben dem Bahngleis (3) parallel zum Bahngleis (3) eine schienenartige Hebeeinrichtung (5) angeordnet ist, deren Länge mindestens der Länge eines anzuhebenden Containers (1) entspricht, daß jede der beiden Hebeeinrichtungen (5) in Längsrichtung der schienenartigen Hebeeinrichtung (5) verstellbare und ggf. in beliebiger Position feststellbare Stützen (6) aufweist und daß an den Stützen (6) Halteelemente (7) angeordnet sind, die an den anzuhebenden Container (1) ankuppelbar sind.

2. Vorrichtung nach Anspruch 1, dadurch gekennzeichnet, dass die Länge der schienenartigen Hebeeinrichtung (5) ein Mehrfaches der Länge von anzuhebenden Containern (1) aufweist, wobei jede der beiden Hebeeinrichtungen (5) mindestens zwei Stützen (6) mit Halteelementen (7) für jeden anzuhebenden Container (1) aufweist.

3. Vorrichtung nach Anspruch 1 oder 2, dadurch gekennzeichnet, dass die schienenartigen Hebeeinrichtungen (5) mit synchron betätigbaren Hubelementen gekoppelt sind.

4. Vorrichtung nach einem der Ansprüche 1 bis 3, dadurch gekennzeichnet, dass die schienenartigen Hebeeinrichtungen (5) hydraulisch betätigt sind.
